Europäisches Patentamt

European Patent Office

Office européen des brevets

(11) Publication number: 0 628 258 A1

# EUROPEAN PATENT APPLICATION
## published in accordance with Art. 158(3) EPC

(21) Application number: 94903041.5

(22) Date of filing: 22.12.93

(86) International application number:
PCT/JP93/01857

(87) International publication number:
WO 94/14336 (07.07.94 94/15)

(51) Int. Cl.⁵: A23K 1/16

(30) Priority: 25.12.92 JP 359427/92

(43) Date of publication of application:
14.12.94 Bulletin 94/50

(84) Designated Contracting States:
DK GB NL SE

(71) Applicant: KANEGAFUCHI KAGAKU KOGYO KABUSHIKI KAISHA
2-4 Nakanoshima 3-chome
Kita-ku Osaka-shi Osaka-fu 530 (JP)

(72) Inventor: UEDA, Yasuyoshi
140-15, Waku,
Aboshi-ku
Himeji-shi, Hyogo-ken 671-12 (JP)
Inventor: SAWA, Ikuo
3-23, Hamada-cho 1-chome,
Takasago-cho
Takasago-shi, Hyogo-ken 676 (JP)
Inventor: KIZAKI, Noriyuki
3-3-26-101, Kita-machi,
Nishi-akashi
Akashi-shi, Hyogo-ken 673 (JP)
Inventor: KOBAYASHI, Hiroki
6-31-17, Shioya-cho,
Tarumi-ku
Kobe-shi, Hyogo-ken 655 (JP)
Inventor: IMAMURA, Shiro
79-3-501, Hirano,
Kakogawa-cho
Kakogawa-shi, Hyogo-ken 675 (JP)

(74) Representative: VOSSIUS & PARTNER
P.O. Box 86 07 67
D-81634 München (DE)

(54) GRANULAR COLORANT AND FORMULA FEED CONTAINING THE SAME.

(57) A granular colorant produced by mixing an astaxanthin-containing extract from *Phaffia rhodozyma* yeast with a coating medium and granulating and drying the formed mixture. The colorant has a high astaxanthin content, can be homogeneously dispersed (or is freely flowable), does not cause dusting, and is excellent in stability.

Technical field of the invention:

The present invention relates to powder and glanular materials containing astaxanthin extracted oil of Phaffia rhodozyma yeast. The powder and glanular materials of the invention are useful for coloring to make attractive the skin and meat of salmon, trout, red sea-bream, gold fish, prawn and the like and the feather of red canary as well as fortification of the nutrient values of the meats of such fishes.

Background art:

It is well known that, when carotenoids such as astaxanthin and vitamin are added to feeds as color improvers and nutrient fortifiers, it is important to have them uniformly mixed and dispersed in the feeds. Liquid-like or wax-like substances are defective with regard to uniform dispersibility, hence, preferred are powder and glanular materials.

As examples in which animals and plants are used as color improvers as astaxanthin pigment sources, there are mentioned meal-like dried products or oils extracted from crustacea such as krill or dried matters of or oils extracted from Phaffia rhodozyma yeast, but most widely used are meal-like dried products or dried yeasts, and these are in the form of powder and granule.

Also when carotenoids such as astaxanthin chemically synthesized under substantially pure conditions are used as color improvers, they are processed into the form of powder and granule.

It is, however, not that they are good if their form is powdery or granular, and further requirements are, among others, enough astaxanthin content from the viewpoint of quantity handled or transported, free fluidity for enhancement of uniform dispersibility and powder properties safe from dusting during handling. If fluidity is poor, it is possible that proper addition is infeasible during pelletization of feeds by the use of adding apparatus generally and conventionally used. Such astaxanthin content and powder properties are strongly desired by feed manufacturers.

Although the aforementioned meal-like dried products and dried yeasts are in the form of powder and granule, the astaxanthin content is not sufficient because of the presence of a large amount of protein and the like constituting cells. Also their powder properties are not preferable because they are poor in fluidity and in the form of micro-powder.

Thus, when animals and plants containing astaxanthin and their processed goods are added for color improvement and/or nutrient fortification, they are poor in astaxanthin content and powder properties.

The carotenoids such as astaxanthin, regardless of their kinds, are highly sensitive to heat and oxygen even under almost pure conditions, and are low in stability. When they are in animal and plant cells, they are liable to be more unstable. It is difficult due to this poor stability to have various carotenoids and compositions containing carotenoids protected from decomposition during storage or decomposition at the temperature, moisture and pressure conditions during pelletization of feeds.

The aforementioned meal-like dried products and dried yeasts are highly unstable, too, and astaxanthin contained therein is liable to decomposition. When astaxanthin-containing animals and plants and their processed products are added to feeds as color improvers or nutrient fortifiers and such feeds are pelletized, this instability is problematic. They are desired to be stable even at high temperatures of not less than 100°C when pelletized to feeds. As a method of stabilizing carotenoids such as astaxanthin, it is well known to add an antioxidant such as butyl hydroxyanisol, butyl hydroxytoluene, tocopherol and ethoxyquin in an amount permissible in concentration. It is, however, difficult to effect sufficient stabilization by addition of such antioxidants alone, hence there have been proposed various stabilizing methods.

In US Patent No. 2756177, there is disclosed a manufacturing method of a free-flowing powder by spraying and drying an emulsion including a vitamin-active material, water, gelatin and/or gum arabic and sugar. The powder produced by this method is water-soluble, and hence it is poor in stability as it is pelletized. In Japanese Laid-Open Patent Publication No. 258807/'88, there is, therefore, disclosed a method of improving the stability of vitamin-active materials at the time of pelletization by thermally cross linking a carbonyl group of reducing sugar with free amino portions of gelatin molecule to thereby produce insoluble beads.

In Japanese Laid-Open Patent Publication No. 48874/'74, there is disclosed a preparation for coloring which includes color stabilizing carotene- or carotenoid-containing plant products but even in this form it is difficult to maintain a sufficient stability. Also, since this form includes most of the plant cell ingredients and also film-forming colloid ingredients, it markedly lowers carotenoid content. It is a highly difficult technical problem to control decomposition not only during storage but also under severe conditions such as temperature, moisture and pressure required for pelletizing.

Thus, from a viewpoint of astaxanthin content, powder properties and stability, powder and glanular materials (CAROPHYLL Pink, CAROPHYLL Pink 5% or CAROPHYLL Pink 8% by the use of gelatin etc. as a coating medium; trade name of F. Hoffmann-La Roche) containing astaxanthin (mixture of SS:RR:meso = 1:1:2) chemically synthesized under pure conditions have so far been widely used as astaxanthin-containing color improvers and animals and plants have not yet been widely used as astaxanthin pigment sources.

The problem the present invention intends to solve is to develop astaxanthin-containing powder and glanular materials and processed goods thereof having a sufficiently high content of astaxanthin which are uniformly dispersible (free-flowing) and safe from dusting, as they are added to feeds for color improvement and nutrient fortification.

After an intensive investigation for obtaining powder and glanular materials from Phaffia rhodozyma yeast containing astaxanthin which is easy to use as a color improver and nutrient fortifier and which is excellent in stability, the present inventors found out that such powder and glanular materials are obtainable by mixing astaxanthin-containing oil extracted from Phaffia rhodozyma yeast with a coating medium, then granulating and drying the resulting mixture.

Disclosure of the invention:

The present invention encompasses, in a first aspect, a powder and glanular material for coloring obtained by mixing astaxanthin-containing oil extracted from Phaffia rhodozyma yeast with a coating medium and granulating and drying the mixture.

The present invention encompasses, in a second aspect, a mixed feed obtained using the aforementioned powder and glanular material for coloring.

Best mode of practicing the invention:

The astaxanthin-containing oil extracted from Phaffia rhodozyma yeast which can be used for the present invention is obtainable by first disintegrating and crushing the cell wall by acid treatment and mechanical treatment and thereafter extracting the content with a solvent and concentrating the resulting solution as described by, for example, Eric A. Johnson et al. in the Applied And Environmental Microbiology, Vol. 35, p. 1155-1159 (1978) and Journal of Biochemistry, Vol. 1, p. 273-282 (1979). As solvents suited for extraction of the content, there are exemplified, among others, acetone, ethanol, ethyl acetate, methyl isobutyl ketone, hexane-ethanol, hexane-acetone, hexane-isopropanol, acetone-edible oil, ethanol-edible oil and edible oils (such as fish oil and vegetable oil). Needless to say, edible oils with yeasts suspended therein crushed for dissolving-out of astaxanthin may also be used.

The extracted oil thus obtained is mainly composed of lipid ingredients but an extracted oil with its astaxanthin-content increased is available with part of lipid ingredients removed by such alternative methods for general pigment concentrating operations as removing the lipid by crystallization in a solvent, molecular distillation of lipid, using lipaze for decomposing lipid before molecular distillation, and using an adsorbent. Also usable is an extracted oil diluted with an animal and plant oil.

As the coating medium usable in the mixing step of the present invention, there may be included a protective colloid usable for foods and feeds such as gelatins of high, middle or low in gelling ability, decomposed gelatin, gelatin protected with amino group, collagen and gum arabic. As other examples, there are included, among others, starch, dextrin, pectin, pullulan, casein, casein compounds, milk and sugar. Moreover, polyvinyl alcohol, polyvinyl pyrrolidone, methyl cellulose, carboxy methyl cellulose, hydroxypropyl cellulose, glycerin fatty acid esters, higher alcohols, higher fatty acids, sugar esters of higher fatty acids, hardened oils and alginates are also usable. These may be used singly or in combination of two or more. These may also be used in combination with other ingredients including, for example, phospholipids such as lecithin, emulsifiers such as sorbitan fatty acid esters, polyoxyethylene sorbitan fatty acid esters, polysorbate and alphatocopheryl polyethylene glycol succinate, vitamins such as vitamin A and vitamin E, edible oils such as peanut oil and soybean oil, stabilizers such as ethoxyquin, butyl hydroxy anisol and vitamin C, mildewproof agents such as propionates, salts such as sodium sulfate and sodium chloride and organic solvents such as acetone, ethanol and methylene chloride. Also usable are other natural and synthesized carotenoids and vitamin active substances or their derivatives.

When the oil extracted from Phaffia rhodozyma is mixed with a coating medium, the weight ratio of the extracted oil to the coating medium is 0.01-10 and preferably 0.1-5. When this ratio is too high, gellation and solidification are difficult to take place, this resulting in difficulty in formation of powder and glanular materials with good flowability. If, on the other hand, this ratio is too low, the astaxanthin content is lowered, this being less economical and also causing rise in water solubility.

3

The oil extracted from Phaffia rhodozyma and the coating medium are mixed normally with a proper amount of water. Mixing can be carried out by stirring or by a known homogenizing method by means of ultrasonic wave and pressure.

An amount of water is one required for ensuring physical properties (viscosity, surface tension etc.) suited for preparation of powder and glanular materials (glanulation), which is dependent on the constitution, composition, temperature and the like of the mixture, the kind of apparatus and the operating conditions. The required amount of water may be added in the whole amount upon mixing or part thereof may be added immediately before glanulation. In some cases, addition of water is not necessary. For stabilization of astaxanthin, the pH of the mixed liquid may generally be adjusted to a suitable value in a range of 5-10.

The mixed liquid can be glanulated in any of the known methods normally by the use of a disc-type rotary spraying apparatus, nozzle type spraying apparatus, nozzle-type dripping apparatus or the like. As the method of collecting the formed liquid drops, there are known such alternatives as gelling and solidifying by drying, gelling and solidifying by cooling, and gelling and solidifying by trapping the same in coolant such as liquid paraffin, or gelling and solidifying by trapping by the use of a general trapping powder such as starch, light silicic acid anhydride and talc. The liquid drops collected are normally dried under reduced or normal pressure to not more than 15 % by weight in water content, preferably to a range of 2-10 % by weight. If necessary, it is possible to add heat treatment for varying the mechanical strength of the powder and glanular material. Moreover, it is possible to select a method of first gelling and solidifying mixed liquid and then crushing and drying, or a method of first gelling and solidifying the mixed liquid and then drying and crushing. It is also possible to incorporate a glanulating step into all such methods.

The resulting particles are separated, if necessary, from the trapping powder, fine particles and large particles, before or after drying. Separation may be carried out by any of the known methods such as sifting or classification by means of air stream. Needless to say, it is advantageous to adjust the spray conditions, crushing conditions and glanulating conditions for the particle size to be within a preferable range.

The powder and glanular materials for coloring of the present invention are mixed at a ratio of 0.01-10 parts by weight of the coating medium per 1 part by weight of astaxanthin-containing oil extracted from Phaffia rhodozyme yeast. Since, however, yeast extracted oil normally contains not less than 2 % by weight of astaxanthin, the powder and glanular material contains approximately not less than 0.2 % by weight, usually 1-2 % by weight of astaxanthin. By the way, astaxanthin contained in the powder and glanular material for coloring of the present invention is of almost pure RR type produced by Phaffia rhodozyma. Compared with other powder and glanular materials including carotenoid-containing animal and plant extracted oil, the powder and granular material of the present invention has powder properties of uniform dispersibility and is safe from dusting, hence it is highly stable and is excellent in stability under severe conditions of pelletizing even without insolubilizing treatment (for example, the method of Japanese Laid-Open Patent Publication No. 2258807/'88).

In order to withstand the severe conditions for pelletization, the powder and glanular materials are generally processed to become more strengthened one. This processing is known to influence their digestibility adversely and further similar adverse influence is known with regard to digestibility when astaxanthin is contained in the cell. However, the powder and glanular materials of the present invention possesses a sufficient digestibility.

For the effect of the present invention to be fully exhibited, it is advisable to have phospholipids included in the powder and granular materials for improving its digestibility. Although addition of phospholipids to feeds as they are pelletized is known to be effective for improvement of absorbability of various mixed feeds, when the powder and glanular materials of the present invention are used, addition of phospholipids to feeds is not so effective and their absorbability is markedly improved when phospholipids are included in the powder and glanular materials. The powder and glanular materials of the present invention including astaxanthin-containing oil are markedly effective in this respect. Especially preferred are in cases where astaxanthin is sufficiently dissolved in the extracted oil with less deposition of crystals, where crystals, if deposited in the state of microcrystalline or where astaxanthin is well emulsified.

As phospholipids, natural ones, extracted ones from natural products, refined ones after extraction or synthesized ones may all be usable. Those comercially available or prepared by known methods may also be used. There are included, among others, soybean lecithin, egg yolk lecithin, phosphatidylcholine, phosphatidylethanolamine, phosphatidylglycerol, phosphatidylinositol, phosphatidylserine, phosphatidic acid, sphingomyelin, lysophospholipid, cardiolipin etc. or mixtures thereof, but preferred are soybean lecithin and egg yolk lecithin from economical aspect. These phospholipids may be impregnated with choline, inositol, diethanolamine, betaine etc, and these may be also used in combination with other ingredients such as starch and dextrin etc. There is no particular limitation for the amount added of phospholipids but it may be from a minute amount to approximately 50 % by weight (to the extracted oil), the improvement of absorbability being more marked with an increasing amount added, hence the optimum amount is selectable with the cost taken into consideration.

The powder and glanular materials for coloring of the present invention are widely used by addition to mixed feeds.

Feeds may be mixed with generally used feed additives such as fish meal, meat-and-bone powder, krill meal, soybean cake, corn gluten meal, torula yeast, wheat flour, starch, guar gum, dextrin, CMC, sodium alginate, phospholipids such as lecithin, minerals, vitamins such as vitamin C and vitamin E and such feed mixtures can be pelletized or molded in a mush form in a usual manner. There is a report that carotenoid produced by Phaffia rhodozyma yeast includes further other carotenoids in addition to astaxanthin, hence still natural-like colors can be provided (for example, Japanese Laid-Open Patent Publication No. 238855/'90) and the powder and glanular materials of the present invention are expected to have delicate colors different from that of CAROPHYLL Pink including astaxanthin only as carotenoids and, moreover, desired colors can be created by mixing them with other natural or synthetic astaxanthin and other carotenoid sources. As pellets, ordinary pellets (cold pellets, hard pellets) and EP (expanded pellets) etc. are usable without any particular limitation.

The effective amount of the powder and glanular material added to feeds is approximately 10-150 ppm as astaxanthin and adjustment may be made according to the object such as color improvement etc. For example, when hasty color improvement of cultivated fish is desired before shipping, feeds with a high astaxanthin content may be used, while when gradual color improvement is desired, feeds of less astaxanthin content will suffice.

The present invention will be described in greater detail with regard to examples, comparative examples and experiments but, needless to say, the scope of the present invention is by no means limited thereby.

"%" given in the following description means "% by weight" unless otherwise noted.

Example 1

After centrifugal separation of yeast from Phaffia rhodozyma culture liquid, the yeast was stirred in a 0.5 N sulfuric acid for 4 hours at 100°C and then cooled to the room temperature. Then, after neutralization with an aqueous solution of sodium hydroxide, the yeast was again separated centrifugally and washed thereafter with an ample amount of water. This yeast was stirred with acetone equal in volume to the culture liquid for 30 min. at the room temperature for extraction of the yeast content. After removal by filtration of the yeast after extraction, Phaffia rhodozyma yeast extracted oil (astaxanthin content 3.2 %) was thus obtained with the solvent distilled off under reduced pressure.

21 g of gelatin (210 bloom) was added to 56 g of distilled water heated to 60 °C and dissolved therein, and an aqueous solution of sodium hydroxide was added to this gelatin solution under stirring to have its pH adjusted to 8. 5. Then 16 g of the oil extracted from Phaffia rhodozyma yeast (astaxanthin content 3.2 %) was added and the gelatin solution was homogenized at 60 °C . The resulting emulsion was sprayed into a starch layer by the use of a disc-type rotary sprayer. After vacuum-drying at the room temperature, the dried matter was sifted for separation of starch from the sprayed material.

The particle size of the powder and glanular material thus obtained was 150-840 μm, its water content was 7 % and its astaxanthin content was 1.1 %.

Example 2

21 g of gum arabic was added to 36 g of distilled water heated to 70°C and dissolved therein. After addition of 10 g of Phaffia rhodozyma yeast extracted oil obtained in Example 1 (astaxanthin content 3.2 %) to this solution, the mixture was homogenized at 70°C . The resulting emulsion was sprayed into a starch layer by the use of a disc-type rotary sprayer. The dried matter was sifted for separation of starch from the sprayed material and then vacuum-dried at the room temperature.

The particle size of the powder and glanular material thus obtained was 150-840 μm , its water content was 5 % and its astaxanthin content was 0.7 %.

Example 3

To the dissolved mixture of 12 g of hardened rape seed oil and 8 g of stearic acid monoglyceride, 3 g of Phaffia rhodozyma yeast extracted oil obtained in Example 1 (astaxanthin content 3.2 %) was added and the mixture was homogenized at approximately 80°C . The resulting emulsion was sprayed at the room temperature of not more than 20 °C by the use of the disc-type rotary sprayer.

The particle size of the powder and glanular material was 150-840 μm and its astaxanthin content was 0.4 %.

Example 4

21 g of gelatin (110 bloom) was added to 56 g of distilled water heated to 60 °C and dissolved therein. Then, after addition of 20 g of Phaffia rhodozyma yeast extracted oil obtained in the same way as in Example 1 (astaxanthin content 4.3 %), the mixture was homogenized at 60°C , and the resulting emulsion was sprayed into a light silicic acid anhydride layer by the use of the disc-type rotary sprayer. The sprayed material was then separated from the light silicic acid anhydride and vacuum-dried at the room temperature.

The particle size of the resulting powder and glanular material was 150-840 μm, its water content was 4 % and its astaxanthin content was 1.9 %.

Example 5

23 g of gelatin (315 bloom) was added to 56 g of distilled water heated to 60 °C and dissolved therein. After addition of 8 g of Phaffia rhodozyma yeast extracted oil (astaxanthin content 3.2 %) to this gelatin solution, the mixture was homogenized at 60 °C . The resulting emulsion was sprayed at the room temperature of not more than 20 °C by the use of the disc-type rotary sprayer and then vacuum-dried at the room temperature.

The particle size of the resulting powder and glanular material was 150-840 μm, its water content was 4 % and its astaxanthin content was 0.8 %.

Example 6

21 g of gelatin (210 bloom) was added to 56 g of distilled water heated to 70 °C and dissolved therein. An aqueous solution of sodium hydroxide was added to this gelatin solution under stirring for adjustment of its pH to 8.5. Then, after addition of 16 g of Phaffia rhodozyma yeast extracted oil (astaxanthin content 3.2 %) obtained in Example 1, the mixture was stirred at 70 °C . Thereafter, an aqueous solution of 5 g of sugar in 5 g of distilled water was added and the mixture was homogenized at 70°C and the resulting emulsion was sprayed into a starch layer by the use of the disc-type rotary sprayer. After vacuum-drying at the room temperature, the sprayed material was separated from starch by sifting.

The particle size of the resulting powder and glanular material was 150-840 μm, its water content was 4 % and its astaxanthin content was 1.0 %.

Example 7

After separating yeast centrifugally from Phaffia rhodozyma yeast culture liquid, the yeast was added to 0.5 N sulfuric acid, stirred for 4 hours at 100°C and cooled to the room temperature. Then, after neutralization with an aqueous solution of sodium hydroxide, the yeast was separated centrifugally and was washed with an ample amount of water. The yeast was stirred for 30 min. at the room temperature with ethyl acetate equal in volume to the culture liquid for extraction of the yeast content. After removal of the yeast after extraction, the solvent was vacuum-distilled off and Phaffia rhodozyma yeast extracted oil (astaxanthin content 2.7 %) was thus obtained.

21 g of gelatin (210 bloom) was added to 56 g of distilled water heated to 60 °C and dissolved therein. An aqueous solution of sodium hydroxide was added to this gelatin solution under stirring for its pH to be adjusted to 8.0, followed by addition of 18 g of Phaffia rhodozyma yeast extracted oil (astaxanthin content 2.7 %) and homogenization at 60 °C . The pH of the resulting emulsion was 7.1. This emulsion was sprayed into a starch layer by the use of the disc-type rotary sprayer and the sprayed material was separated from starch by sifting after vacuum-drying at the room temperature.

The particle size of the obtained powder and glanular material was 150-840 μm, its water content was 6 % and its astaxanthin content was 1.0 %.

Example 8

2.1 Kg of gelatin (210 bloom) was added to 5.6 Kg of distilled water heated to 60 °C and dissolved therein. An aqueous solution of sodium hydroxide was added to this gelatin solution under stirring for its pH to be adjusted to 8.5, followed by addition of 1.8 Kg of Phaffia rhodozyma yeast extracted oil (astaxanthin content 2.4 %) obtained in the same way as in Example 1 and homogenization at 60°C. This emulsion was sprayed into a starch layer by the use of the nozzle-type sprayer and the sprayed material was separated from starch by sifting after flush-drying first at the room temperature and then at 50°C.

The particle size of the obtained powder and glanular material was 74-840 μm, its water content was 5 % and its astaxanthin content was 0.9 %.

Example 9

21 g of gelatin (210 bloom) was added to 56 g of distilled water heated to 60 °C and dissolved therein. 16 g of Phaffia rhodozyma yeast extracted oil (astaxanthin content 3.2 %) was added and then dispersed for homogenization at 60°C. This resulting emulsion was sprayed into a starch layer by the use of the disc-type rotary sprayer and the sprayed material was separated from starch by sifting after vacuum-drying at the room temperature.

The particle size of the obtained powder and glanular material was 150-840 μm, its water content was 7 % and its astaxanthin content was 1.1 %.

Example 10

2.1 Kg of gelatin (315 bloom) was added to 6.6 Kg of distilled water heated to 60 °C and dissolved therein. To this gelatin solution, 82 g of vitamin C was added under stirring and then an aqueous solution of sodium hydroxide was added to this gelatin solution under stirring for its pH to be adjusted to 8.5. Then, 1.8 Kg of Phaffia rhodozyma yeast extracted oil (astaxanthin content 1.5 %) obtained in the same way as in Example 1 was slowly added to the aforementioned gelatin solution heated to 60 °C after vacuum-heating at approximately 80 °C . 1.4 g of ethoxyquin was added, too. During their addition and for one hour thereafter the gelatin solution was emulsified under vigorous stirring and the resulting emulsion was sprayed into a starch layer by the use of a nozzle-type sprayer. The sprayed material was separated from starch by sifting and then vacuum-dried.

Example 11

The powder and glanular material was obtained in the same way as in Example 10, except that 47 g of soybean lecithin was added together with 1.8 Kg of Phaffia rhodozyma yeast extracted oil (assaxanthin content 1.5 %).

Comparative example 1

Yeast was centrifugally separated from Phaffia rhodozyma yeast culture liquid and then washed with an ample amount of water. The aqueous suspension containing this yeast was sprayed by the use of the disc-type sprayer and then dried. The particle size of the resulting powder and glanular material was 10-20 μm, its water content was 5 % and its astaxanthin content was 0.23 %.

Comparative example 2

Yeast was centrifugally separated from Phaffia rhodozyma yeast culture liquid, stirred for 4 hours in 0.5 N sulfuric acid and then cooled to the room temperature. After neutralizing with an aqueous solution of sodium hydroxide, the yeast separated centrifugally and then washed with an ample amount of water, and the aqueous suspension including this yeast was sprayed by the use of the disc-type rotary sprayer and then dried.

The particle size of the resulting powder and glanular material was 10-20 μm, its water content was 6 % and its astaxanthin content was 0.30 %.

Comparative example 3

15 g of the dry yeast obtained in Comparative example 1 was stirred together with 10 g of gelatin (210 bloom) and 20 g of distilled water at 60 °C and this mixture was sprayed into a starch layer by the use of the disc-type rotary sprayer. The sprayed material was separated from starch by sifting and then vacuum-dried at the room temperature.

The particle size of the resulting powder and glanular material was 150-840 μm, its water content was 5 % and its astaxanthin content was 0.13 %.

Comparative example 4

15 g of the dry yeast obtained in comparative example 2 was stirred at 60 °C together with 10 g of gelatin and 20 g of distilled water and this mixture was sprayed into a starch layer by the use of the disc-type rotary sprayer. The powder and glanular material was separated from starch by sifting and then vacuum-dried at the room temperature.

The particle size of the resulting powder and glanular material was 150-840 μm, its water content was 9 % and its astaxanthin content was 0.15 %.

Comparative examples 5, 6 and 7

21 g of gelatin (210 bloom) was added to 56 g of distilled water heated to 60 °C and dissolved therein. Then 16 g of carotenoid pigment extracted oils shown in Table 1 was added and dispersed at 60°C for homogenization. The resulting emulsion was sprayed into a starch layer by the use of the disc-type rotary sprayer and, after vacuum drying at the room temperature, the sprayed material was separated by sifting from starch.

The obtained powder and glanular materials were as shown in Table 2.

Table 1

| (Carotenoid pigment extracted oils) | | |
|---|---|---|
| | Trade names | Carotenoids |
| Comp. example 5 | Crab pigment RIKECOLORKANI 40 (Riken Vitamin K.K.) | astaxanthin |
| Comp. example 6 | Oilness ANATO BS-3 (San-ei Kagaku K.K.) | bixin, norbixin |
| Comp. example 7 | PAPRIKA PIGMENT 100 % (K.K. Aizen) | capsanthin |

Table 2

| (Powder and granular materials) | | | |
|---|---|---|---|
| | Particle size (μm) | Water content (%) | Carotenoid content (%) |
| Comp. example 5 | 150 ~ 840 | 6 | 0.5 |
| Comp. example 6 | 150 ~ 840 | 8 | 1.7 |
| Comp. example 7 | 150 ~ 840 | 7 | 2.8 |

Experiment 1

The fluidity (angle of repose, degree of compression) of the powder and glanular materials obtained in Examples 1-8 and Comparative examples 1-4 and CAROPHYLL Pink 8% (trade name of F. Hoffmann-La Roche) were evaluated and the results were as shown in Table 3. As is apparent from Table 3, the products of the present invention have an excellent fluidity.

Table 3

| | Angle of repose (degree) | Degree of Compression ( % ) |
|---|---|---|
| Powder and granular material obtained in Example 1 | 35 | 13 |
| Powder and granular material obtained in Example 2 | 35 | 13 |
| Powder and granular material obtained in Example 3 | 40 | 18 |
| Powder and granular material obtained in Example 4 | 35 | 17 |
| Powder and granular material obtained in Example 5 | 45 | 18 |
| Powder and granular material obtained in Example 6 | 35 | 15 |
| Powder and granular material obtained in Example 7 | 35 | 13 |
| Powder and granular material obtained in Example 8 | 40 | 16 |
| Powder and granular material obtained in Comp. Example 1 | Not measurable | 44 |
| Powder and granular material obtained in Comp. Example 2 | Not measurable | 50 |
| Powder and granular material obtained in Comp. Example 3 | 35 | 14 |
| Powder and granular material obtained in Comp. Example 4 | 35 | 17 |
| CAROPHYLL Pink | 35 | 13 |

Degree of compression: 100 x (bulk density after tapping − bulk density before tapping) /  bulk density after tapping

Experiment 2

The stability of the extracted oils obtained in Examples 1 and 6, powder and glanular materials obtained in Examples 1-8, powder and glanular materials obtained in Comparative examples 1-4 and CAROPHYLL Pink 8% (trade name of F. Hoffmann-La Roche) was evaluated and the results were as shown in Table 4. As is apparent from Table 4, the products of the present invention have a high degree of stability.

Table 4

| | Residual rate of astaxanthin ( % ) |
|---|---|
| Powder and granular material obtained in Example 1 | 88 |
| Powder and granular material obtained in Example 2 | 72 |
| Powder and granular material obtained in Example 4 | 84 |
| Powder and granular material obtained in Example 5 | 85 |
| Powder and granular material obtained in Example 6 | 83 |
| Powder and granular material obtained in Example 7 | 81 |
| Powder and granular material obtained in Example 8 | 84 |
| Powder and granular material obtained in Comp. Example 1 | 33 |
| Powder and granular material obtained in Comp. Example 2 | 13 |
| Powder and granular material obtained in Comp. Example 3 | 45 |
| Powder and granular material obtained in Comp. Example 4 | 27 |
| Extracted oil obtained in Example 1 | 34 |
| Extracted oil obtained in Example 6 | 31 |
| CAROPHYLL Pink | 76 |

Residual rate of astaxanthin: Residual rate of astaxanthin after storage for 2 hours at 115 °C shielded from light

Experiment 3

The stability of the powder and glanular materials obtained in Examples 1 and 9 and Comparative examples 5, 6 and 7 and CAROPHYLL Pink 8% (trade name of F. Hoffmann-La Roche) was evaluated and the results were as shown in Table 5. As seen from Table 5, the powder and glanular materials containing Phaffia rhodozyma have higher stability than those containing carotenoid pigment extracted oil.

Table 5

| | Residual rate of carotenoid ( % ) |
|---|---|
| Powder and granular material obtained in Example 1 | 80 |
| Powder and granular material obtained in Example 9 | 79 |
| Powder and granular material obtained in Comp. Example 5 | 30 |
| Powder and granular material obtained in Comp. Example 6 | 32 |
| Powder and granular material obtained in Comp. Example 7 | 46 |
| CAROPHYLL Pink | 55 |

Residual rate of carotenoid: Residual rate of carotenoid after storage for 2 hours at 150 °C shielded from light

Experiment 4

The powder and glanular material obtained in the same way as in Example 1 (A), that obtained in the same way as in Example 6 (B) or CAROPHYLL Pink 8% (trade name of F. Hoffmann-La Roche) (C) were added to 75 kg of feeds (approx. 65% of fish meal, approx. 10% of fish oil, approx. 23% of wheat flour, approx. 1% of soybean lecithin and approx. 2% of minerals) so that the carotenoid content in feed was 50 ppm. When CAROPHYLL Pink was added, gelatin and starch were added to the feed so as to make it nutritiously same as the products of the present invention.

The fortified feeds were pelletized by the use of an extrusion-type pelletizer under the following conditions.

Feed supply rate:      120 kg/hr
Water supply rate:     Approx. 0.2 kg/min.(Mixing cylinder)

|                     | Approx. 0.04 kg/min.(Extruder)      |
| Steam supply rate:  | Approx. 9.0 kg/hr.(Mixing cylinder) |
|                     | Approx. 4.0 kg/hr.(Extruder)        |
| Temperature:        | 71°C (Mixing cylinder)              |
|                     | 83°C (Inlet of extruder)            |
|                     | 140°C (Center of extruder)          |
|                     | 61°C (Outlet of extruder)           |
| Pressure:           | 110 psi (Outlet of extruder)        |

The resulting feed pellets were cooled and evaluation was made of their carotenoid residual rate. The results are shown in Table 6. As is apparent from Table 6, the products of the present invention have a good stability.

Table 6

| Feed pellets | Residual rate of carotenoid ( % ) |
|:---:|:---:|
| A | 88 |
| B | 92 |
| C | 88 |

Experiment 5

The feed pellets obtained in Experiment 4 were oil-coated, stored for 28 days at 20 °C shielded from light and the carotenoid residual rate was evaluated, and the results are shown in Table 7. As is apparent from Table 7, the product of the present invention has a good stability.

Table 7

| Feed pellets | Residual rate of carotenoid ( % ) |
|:---:|:---:|
| A | 100 |
| B | 100 |
| C | 100 |

Experiment 6

CAROPHYLL Pink 8% (trade name of F. Hoffmann-La Roche) (A), the powder and glanular material obtained in Example 10 (B) or that obtained in Example 11 (C) were added to 75 kg of feeds [containing approx. 65% of fish meal, approx. 10% of fish oil (containing approx. 10% of vitamin C and approx. 100 ppm of ethoxyquin), approx. 23% of wheat flour, approx. 1% of soybean lecithin and approx. 0.5% of minerals (containing 2% of ytterbium oxide)] so that the astaxanthin content of the mixture was approx. 50 ppm. (A) was further mixed with gelatin and starch to be nutritiously equal to (B) and (C).

These feeds were well mixed and pelletized by an extrusion-type pelletizer under the following conditions.

| Feed supply rate:  | 120 kg/hr                           |
| Water supply rate: | Approx. 0.2 kg/min.(Mixing cylinder)|
|                    | Approx. 0.04 kg/min.(Extruder)      |
| Steam supply rate: | Approx. 9.0 kg/min.(Mixing cylinder |
|                    | Approx. 4.0 kg/hr.(Extruder)        |
| Temperature:       | 71°C (Mixing cylinder)              |
|                    | 83°C (Inlet of extruder)            |
|                    | 140°C (Center of extruder)          |
|                    | 61°C (Outlet of extruder)           |

Pressure:                110 psi (Outlet of extruder)

After drying and cooling the feed pellets extruded and expanded in air stream, approx. 3 kg of fish oil (containing 10% of vitamin C and 100 ppm of ethoxyquin) was added to 50 kg of feed pellets and fish oil-coated feed pellets were obtained by mixing at the room temperature.

The astaxanthin contents of the fish oil-coated astaxanthin-containing feed pellets were (A) 32 ppm, (B) 40 ppm and (C) 40 ppm, respectively. There was no difference between the astaxanthin decomposition rate during pelletizing and the astaxanthin residual rate of the feed pellets after storage at 20°C shielded from light.

These feed pellets were fed to Atlantic salmon under the following conditions and digestibility of astaxanthin was evaluated.

Testing institute:    AKVAFORSK Institute of Aquaculture Research Ltd., Norway
Fish tested:          Atlantic salmon, average weight approx. 750 g
Test plot:            3 pens (total number of fish 150) for each kind of feed pellets

Rearing conditions:

Pen:              Inside capacity 27 m$^3$ (number of fish 50)
Water used:       Sea water, ambient temperature
Feeding:          3 times/day, daily quantity of feed 0.5% of fish weight.
Feeding period:   2 weeks

Digestibility evaluation method:

After feeding for 2 weeks, all Atlantic salmon were anesthetized with MS-222 (Metkainsulfonate). Fingers were applied to the fish hindgut to squeeze faeces out. The squeezed-out faeces was immediately frozen with liquid nitrogen and freeze-dried.

The ytterbium content of the feed pellets and freeze-dried faeces was measured by the emission spectral analysis method. The astaxanthin content in feed pellets and freeze-dried faeces was measured by the HPLC method. The digestibility was calculated by the following equation.

Digestibility = 100 - (100 x a x b)
a = Ytterbium content in feed (ppm) / Ytterbium content in faeces (ppm)
b = Astaxanthin content in faeces (ppm) / Astax anthin content in feed (ppm)

The digestibility when each kind of feed pellets was used is shown in Table 8. As is apparent from Table 8, the digestibility is markedly improved when phospholipid is included in the powder and glanular material.

Table 8

| Feed pellets | Astaxanthin digestibility |
|---|---|
| A | 23.9 ± 2.4 % |
| B | 8.5 ± 2.4 % |
| C | 30.2 ± 4.1 % |

Industrial utilization of the invention:

According to the present invention, it is possible to obtain a powder and glanular material containing Phaffia rhodozyma yeast extracted oil which has an enough astaxanthin content, and which is sufficiently stable, uniformly dispersible (freely flowable) and dust-free.

**Claims**

1. A powder and granular material for coloring obtained by mixing astaxanthin-containing oil extracted from Phaffia rhodozyma yeast with a coating medium and granulating and drying the mixture.

2. The powder and granular material for coloring of Claim 1, wherein the coating medium contains at least one selected from the group consisting of gelatin, collagen and gum arabic.

3. The powder and granular material for coloring of Claim 1, wherein a phosholipid is mixed with the mixture prior to granulating said mixture.

4. The powder and granular material for coloring of Claim 3, wherein the phosholipid is lecithin.

5. A mixed feed using the powder and granular material for coloring of any one of Claims 1 to 4.

## INTERNATIONAL SEARCH REPORT

International application No.

PCT/JP93/01857

**A. CLASSIFICATION OF SUBJECT MATTER**

Int. Cl$^5$ A23K1/16

According to International Patent Classification (IPC) or to both national classification and IPC

**B. FIELDS SEARCHED**

Minimum documentation searched (classification system followed by classification symbols)

Int. Cl$^5$ A23K1/16, A23K1/18

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, B2, 63-61907 (Sanraku Inc.),<br>November 30, 1988 (30. 11. 88), (Family: none)<br>Lines 5 to 14, column 4 | 1, 2, 5<br>3, 4 |
| X<br>Y | JP, A, 5-76347 (Qest International BV.),<br>March 30, 1993 (30. 03. 93), (Family: none)<br>Lines 3 to 13, column 3 | 1, 5<br>2-4 |
| Y | JP, A, 4-158749 (Ajinomoto Takara Corp.),<br>June 1, 1992 (01. 06. 92), (Family: none) | 1-5 |
| Y | JP, A, 4-53455 (Ajinomoto Takara Corp.),<br>February 21, 1992 (21. 02. 92),<br>(Family: none) | 1-5 |

☐ . Further documents are listed in the continuation of Box C.      ☐    See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| February 1, 1994 (01. 02. 94) | February 22, 1994 (22. 02. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)